# EUROPÄISCHE PATENTANMELDUNG

(11) **EP 2 305 392 A1**
(43) Veröffentlichungstag der Anmeldung: **06.04.2011**
(21) Anmeldenummer: 09172195.1
(22) Anmeldetag: 05.10.2009
(51) Int. Cl.: B21B 45/00

(54) **Verfahren zum Walzen von Walzgut und Walzstraße mit wenigstens einem Walzgerüst zum thermomechanischen Walzen von Walzgut**

(71) Anmelder: Siemens Aktiengesellschaft, 80333 München (DE)
(72) Erfinder: Schmidt, Birger, Dr., 09618 Brand-Erbisdorf (DE)

(57) **Zusammenfassung**

Die Erfindung betrifft eine Walzstraße und ein Verfahren zum Walzen von Walzgut (G), insbesondere Grobblech, wobei das Walzgut (G) einen Walzprozess durchläuft, wobei der Walzprozess eine erste Warmwalzumformung und eine zweite Warmwalzumformung umfasst, wobei der Walzprozess eine Kühlphase zwischen der ersten und der zweiten Warmwalzumformung umfasst, bei der das Walzgut (G) von einer ersten höheren Temperatur auf eine zweite niedrigere Temperatur abgekühlt wird, wobei während des Kühlens des Walzguts (G) einer Temperaturdifferenz zwischen einem Mittenbereich (M) des Walzguts (G) und einem Kantenbereichs (K) des Walzguts (G) entgegengewirkt wird. Indem während des Kühlens der Kantenbereich (K) mittels einer Heizeinrichtung (4, 5, 7, 8, 9) geheizt wird, kann Thermoschrott verhindert werden und ein qualitativ hochwertiges Endprodukt erzielt werden.

## Beschreibung

Die Erfindung betrifft ein Verfahren zum Walzen von Walzgut, insbesondere Grobblech, wobei das Walzgut einen Walzprozess durchläuft, wobei der Walzprozess wenigstens eine erste Warmwalzumformung und eine zweite Warmwalzumformung umfasst, wobei der Walzprozess eine Kühlphase zwischen der ersten und der zweiten Warmwalzumformung des Walzguts umfasst, bei der das Walzgut von einer ersten Auslauf-Temperatur auf eine zweite Eingangs-Temperatur abgekühlt wird, wobei während des Kühlens des Walzguts einer Abkühlung eines Kantenbereichs des Walzguts entgegengewirkt wird. Ferner betrifft die Erfindung eine Walzstraße mit wenigstens einem Walzgerüst zum thermomechanischen Walzen von Walzgut, insbesondere Grobblech, mit einer Einrichtung zum Kühlen von zwischen zwei Warmumformungen, insbesondere Warmwalzstichen, zu kühlendem Walzgut.

Die Erfindung liegt auf dem technischen Gebiet der Walzwerkstechnik, insbesondere im Bereich des Grobblechwalzens.

Beim Grobblechwalzen nimmt der Temperatur-Umformungs-Weg, den das Walzgut durchläuft, maßgeblich Einfluss auf die am Ende des Walzprozesses vorliegenden mechanischen Eigenschaften des Walzguts. Dies bedeutet, die mechanischen Eigenschaften des Walzzwischenprodukts bzw. Endprodukts sind abhängig davon, bei welchen Temperaturen das Walzgut gewalzt wurde, und ggf. auch von der jeweiligen Dickenabnahme bei dem jeweiligen Walzstich.

Beim sogenannten thermomechanischen Walzen von Walzgut erfolgt der Walzprozess derart, dass das Walzgut nur in bestimmten zulässigen Temperaturfenstern gewalzt wird. Dies bedeutet, dass sich Walzstiche und gezielte Kühlphasen abwechseln.

Bei den Kühlphasen des Walzguts ist nun festzustellen, dass sich der Kantenbereich des Walzguts stärker abkühlt, als der Mittenbereich des Walzguts.

Diese Abkühlung des Kantenbereichs ist der zusätzlichen Oberfläche des Kantenbereichs geschuldet, über welche im Vergleich zum Mittenbereich zusätzlich Energie an die Umgebung abgegeben wird, z.B. in Form von Wärmestrahlung bzw. Infrarot-Strahlung.

Die Temperaturdifferenz zwischen Kantenbereich des Walzguts und Mittenbereich des Walzguts ist umso größer, je dicker das Walzgut ist und je länger dieses abkühlt.

Dies führt dazu, dass der Kantenbereich am Ende der Kühlphase kühler ist, als der Mittenbereich des Walzguts. Dies bedingt jedoch wiederum unterschiedliche mechanische Eigenschaften von Kantenbereich und Mittenbereich im gewalzten Zwischenprodukt bzw. Endprodukt.

Diese Eigenschaftsunterschiede des Walzguts dürfen jedoch gewisse Grenzen nicht überschreiten, da sonst das gewalzte Endprodukt nicht mehr für den vorgesehenen Zweck eingesetzt werden kann. Dies kann der Fall sein, wenn etwa Festigkeitseigenschaften des Walzguts nicht ausreichend homogen sind, z.B. sich das Walzgut unter Belastung im Kantenbereich deutlich anders verhält als im Mittenbereich.

Sind diese Grenzen bei der Herstellung des Walzguts nicht eingehalten worden, so ist das gewalzte Produkt als Schrott, insbesondere Thermoschrott, anzusehen.

Mit dieser Problematik befasst sich auch die japanische Offenlegungsschrift JP 02211903 A. Diese schlägt vor, die Kantenüberkühlung zu verringern, indem mittels eines Stauchgerüsts der Kantenbereich verdickt wird. Dadurch wird die relative Oberfläche pro Volumen des Kantenbereichs verringert, wodurch der Kantenbereich weniger thermische Energie abgibt. Der Erfindung liegt die Aufgabe zugrunde, ein Verfahren und eine Vorrichtung bereitzustellen, mittels derer in vereinfachter Weise eine übermäßige Kantenabkühlung beseitigt oder vermieden werden kann.

Der verfahrensmäßige Teil der Aufgabe wird gelöst durch ein Verfahren der eingangs genannten Art, wobei während des Kühlens der Kantenbereich mittels einer Heizeinrichtung geheizt wird.

Unter "Heizen" des Kantenbereichs wird eine Zufuhr von Energie in den Kantenbereich verstanden, welche dem übermäßigen Abkühlen des Kantenbereichs in der Kühlphase zwischen zwei Warmumformungen entgegenwirkt.

Unter "übermäßigem Abkühlen" des Kantenbereichs wird der Effekt verstanden, dass während des Kühlens des Walzguts in der Kühlphase eine Temperaturdifferenz zwischen dem Mittenbereich und dem Kantenbereich des Walzguts auftritt, wobei die Abkühlung dann "übermäßig" ist, wenn aufgrund der Temperaturdifferenz zwischen Kantenbereich und Mittenbereich Schwierigkeiten in der weiteren Verarbeitung bzw. mit den Qualitätsmerkmalen des gewalzten Endprodukts resultieren, welche dazu führen, dass für das Walzgut nicht mehr die ursprünglich gewünschten Endproduktparameter, inklusive eines Toleranzbereichs, erreicht werden können.

Unter Kantenbereich wird der Randbereich des Walzguts verstanden. Der Kantenbereich wird in der Regel von einer Kantenfläche begrenzt, sowie von einem randnahen Abschnitt der Oberseite und der Unterseite des Walzguts. Der Kantenbereich weist eine Ausdehnung ausgehend vom Walzgutrand in Richtung Walzgutmittenachse von ca. 0,5 bis 3 mal der Dicke des abkühlenden Walzguts auf.

Unter dem Mittenbereich des Walzguts wird der Bereich zwischen dem Kantenbereich verstanden. Der Mittenbereich umfasst die Walzgutmittenachse.

Vorzugsweise wird der Kantenbereich derart geheizt, dass die Temperatur über die Walzgutbreite innerhalb eines vorgebbaren Temperaturbereichs, vorgegeben durch einen unteren Temperaturgrenzwert und einen oberen Temperaturgrenzwert, liegt. Der obere und der untere Temperaturgrenzwert ist in diesem Fall vorzugsweise derart gewählt, dass Temperaturunterschiede in Breitenrichtung des Walzguts zwischen oberem und unterem Temperaturgrenzwert noch zu tolerierbaren Abweichungen in den mechanischen Eigenschaften des gewalzten Walzguts führen.

Damit kann Ausschuss durch zu große Temperaturdifferenzen zwischen Mittenbereich des Walzguts und Kantenbereich des Walzguts vermieden werden.

Wird eine Temperaturmessung, insbesondere kontaktlos, für den Kantenbereich und den Mittenbereich des Walzguts vorgesehen, kann anhand eines Vergleichs der Temperaturen eine mittels der Heizeinrichtung in den Kantenbereich einzubringende Energie gesteuert und/oder geregelt werden. Insbesondere kann auf diese Weise eine geschlossene Regelschleife für die Heizeinrichtung realisiert werden.

In einer vorteilhaften Ausgestaltung der Erfindung wird während des Kühlens der Kantenbereich durch Infrarot-Strahlung beheizt. Hierdurch kann kontaktlos Energie in den Kantenbereich des Walzguts eingebracht werden. Je nach Ausbildung der Infrarot-Strahlungsquelle kann diese gesteuert und/oder geregelt werden. Die Infrarot-Strahlungsquelle kann als aktiv steuerbare Einrichtung mit einstellbarer Heizleistung, d.h. Strahlungsleistung, ausgebildet sein. Insbesondere kann zu diesem Zweck elektrische Energie in Infrarot-Strahlung gewandelt werden.

In einer weiteren vorteilhaften Ausführungsform des erfindungsgemäßen Verfahrens wird der Kantenbereich durch vom Kantenbereich abgestrahlte und von einem Reflektor auf den Kantenbereich zurückreflektierte Wärmestrahlung beheizt. Dies kann bspw. mittels eines im Kühlbereich angeordneten Reflektors erreicht werden. Damit wird der Energieverlust des Kantenbereichs verringert und dem übermäßigen Absinken der Temperatur des Kantenbereichs entgegengewirkt. Vorteil hierbei ist, dass es sich bei einem Reflektor um ein passives Element handelt. D.h. für den Reflektor fallen - bis auf ggf. Reinigungskosten zur Beibehaltung einer hohen Reflektivität - keine weiteren laufenden Kosten an.

In einer weiteren vorteilhaften Ausführungsform des erfindungsgemäßen Verfahrens wird der Kantenbereich mittels eines Heiz-Brenners geheizt. Dieser kann bspw. mit dem Reflektor kombiniert werden. Auch hierdurch kann ein übermäßiges Abkühlen des Kantenbereichs vermieden bzw. beseitigt werden, ohne dem Abkühlen des Mittenbereichs des Walzguts entgegenzuwirken. Als Brenngas wird vorzugsweise Methan verwendet. Es können aber auch beliebige andere Brennmittel, insbesondere Brenngase, verwendet werden.

In einer vorteilhaften Ausführungsform des erfindungsgemäßen Verfahrens wird der Kantenbereich mittels induzierter Wirbelströme beheizt. Dies ist ein besonderes effizientes Verfahren. Eine Induktionsheizung erlaubt eine hohe Energieeinbringung in ein räumlich begrenztes Volumen. Erfolgt dies im Kantenbereich kann dadurch einerseits eine übermäßige Abkühlung des Kantenbereichs verhindert bzw. beseitigt werden, andererseits wird der gewünschten Abkühlung des gesamten Walzguts nicht entgegengewirkt, da die Energie nur in einem kleinen Volumen des Walzguts, nämlich dem Volumen des Kantenbereichs, eingebracht wird.

Das induktive Heizen kann alternativ oder zusätzlich zum Heizen des Kantenbereichs mittels Infrarot-Strahlung erfolgen.

In einer weiteren vorteilhaften Ausführungsvariante der Erfindung wird der Abkühlung des Kantenbereich zusätzlich entgegengewirkt, indem zeitlich vor der Kühlphase der Kantenbereich relativ zur Walzgutmitte verdickt wird. Dies kann durch Staucher geschehen, wie aus dem Stand der Technik bekannt. Vorzugsweise geschieht dies jedoch mit einem herkömmlichen Walzgerüst mit horizontalen Arbeitswalzen. Das sogenannte Plan View Pattern Control-Verfahren erlaubt das Herstellen eines verdickten Kantenbereichs mit einem horizontal arbeitenden Walzgerüst. Auf den Staucher kann somit für diesen Zweck verzichtet werden. Durch das Verdicken des Kantenbereichs wird die Oberfläche des Kantenbereichs im Verhältnis zu dessen Volumen verkleinert, wodurch das Verhältnis von Energieverlust zu Energieinhalt des Kantenbereichs reduziert wird. Dies führt zu einer Verlangsamung der Abkühlung. Auch hierdurch kann ein signifikanter Beitrag erfolgen, der ein übermäßiges Abkühlen des Kantenbereichs unterbindet oder behebt.

Der vorrichtungsmäßige Teil der Aufgabe wird gelöst mittels einer gattungsgemäßen Walzstraße, wobei im Bereich der Kühleinrichtung wenigstens eine Heizeinrichtung zum Heizen wenigstens eines Abschnitts eines Kantenbereichs des Walzguts vorhanden ist.

Die Kühleinrichtung kann als luftgekühltes Kühlbett ausgestaltet sein. Auch kann die Kühleinrichtung als mit Wasser kühlende Kühleinrichtung ausgebildet sein.

Unter Kühlbereich bzw. Kühleinrichtung wird derjenige Bereich der Walzstraße verstanden, welcher zum Kühlen des Walzguts, insbesondere auf eine nächste Walztemperatur, vorgesehen ist.

In einer vorteilhaften Ausführungsform der erfindungsgemäßen Vorrichtung umfasst die Heizeinrichtung eine Infrarot-Strahlenquelle. Diese kann passiv oder aktiv ausgebildet sein. Unter passiv wird bspw. verstanden, dass die Infrarot-Strahlung nicht von der Infrarot-Strahlenquelle selbst erzeugt wird, sondern bspw. nur von dieser gebündelt oder reflektiert wird. Unter aktiver Infrarot-Strahlenquelle wird bspw. eine Strahlenquelle verstanden, welche bspw. elektrische Energie in Infrarot-Strahlung überführt, und diese auf den Kantenbereich des Walzguts abstrahlt.

In einer weiteren vorteilhaften Ausführungsvariante der Erfindung umfasst die Infrarot-Strahlenquelle einen Reflektor, wobei der Reflektor derart ausgebildet und angeordnet ist, dass vom Kantenbereich ausgehende Wärmestrahlen wenigstens teilweise auf den Kantenbereich des Walzguts zurückreflektiert werden. Hierdurch kann ein besonders einfaches und kostengünstiges Mittel bereitgestellt werden, um ein übermäßiges Abkühlung des Kantenbereichs zu beseitigen bzw. zu vermeiden.

Als Reflektoren sind insbesondere Reflektoren mit metallischen Oberflächen geeignet. Die Reflektivität des Reflektors kann durch eine geeignete Oberfläche, bspw. eine Beschichtung, weiter erhöht werden, indem die Oberfläche auf die Reflektion von thermischer Strahlung angepasst wird. Insbesondere weisen Kupfer und Aluminium eine hohe Reflektivität für Infrarot-Strahlung auf.

Der Reflektor ist vorzugsweise wenigstens abschnittsweise gegenüberliegend zur Kantenfläche als auch wenigstens abschnittsweise gegenüberliegend zur Walzgutoberseite des Kantenbereichs angeordnet.

Vorteilhaft ist es, dass der Reflektor wenigstens zwei Infrarot-Strahlen reflektierende Flächen aufweist, welche einen Winkel einschließen. Im Fall von zwei Reflektorflächen weist der Reflektor ein Winkelprofil auf. Durch die Verwendung von mehr als zwei Reflektorflächen können auch andere Profile realisiert werden. Diese Ausführung als Winkelprofil gewährleistet bereits eine gute Rückreflektion der vom Kantenbereich ausgehenden Infrarot-Strahlung auf den Kantenbereich und ist vergleichsweise unaufwändig. Vorzugsweise bilden jeweils zwei Reflektorflächen einen Winkel. Im Falle eines Winkelprofils weist der Reflektor im Betriebszustand eine horizontale Reflektorfläche und eine vertikale Reflektorfläche auf. D.h. die vertikale Reflektorfläche verläuft im Wesentlichen parallel zur Kantenfläche des Kantenbereichs, die horizontale Reflektorfläche verläuft im Wesentlichen parallel zur Oberseite bzw. Unterseite des Walzguts.

Die Verwendung eines Winkelprofils ermöglicht eine Rückstrahlung von vom Kantenbereich ausgehenden Wärmestrahlen zurück auf den Kantenbereich mittels Zweifachreflexion. Hierdurch lässt sich das übermäßige Abkühlen des Kantenbereichs effizient unterbinden, da vergleichsweise wenig von der vom Kantenbereich abgestrahlten thermischen Strahlungsleistung verloren geht.

In einer weiteren vorteilhaften Ausführungsform der Erfindung ist der Reflektor derart ausgebildet, dass dieser den Kantenbereich umgreift. Damit ist der Reflektor derart ausgebildet, dass ein Teil des Reflektors gegenüber der Unterseite des abkühlenden Walzguts anordenbar ist, ein Teil gegenüber der Kantenfläche des abkühlenden Walzguts und ein Teil gegenüber der Oberseite des abkühlenden Walzguts. Hierdurch wird der Anteil des Strahlungsverlusts noch weiter reduziert. Es wird noch ein größerer Anteil der vom Kantenbereich emittierten Wärmestrahlen auf den Kantenbereich zurückgeworfen.

Um einen Teil des Reflektors unterhalb der Unterseite des abkühlenden Walzguts positionieren zu können, ist entweder der Reflektor oder Rollengang entsprechend auszubilden.

Eine vorteilhafte Lösung ist es, das Walzgut während des Abkühlens anzuheben, um einen umgreifenden Reflektor verwenden zu können. Dies kann mit einer entsprechenden Hebeeinrichtung realisiert werden. Damit kann auch die von der Unterseite des Kantenbereichs ausgehende Infrarot-Strahlung auf den Kantenbereich zurückreflektiert werden, sofern ein geeigneter Reflektor verwendet wird.

Ein solches Vorgehen hat ferner den Vorteil, dass das abkühlende Walzgut die Rollen des Rollgangs nicht mehr kontaktiert, wodurch diese keiner Überhitzung mehr ausgesetzt werden. Darüber hinaus ist durch den fehlenden Kontakt des heißen Walzguts mit den Rollgangsrollen auch keine Oszillation des Walzguts mehr auf dem Rollengang erforderlich.

Eine hierzu geeignete Hebeeinrichtung ist vorzugsweise derart ausgebildet, dass ein möglichst geringer Wärmfluss vom Walzgut auf die Hebeeinrichtung erfolgt.

Ferner sollte die Kontaktfläche von Hebeeinrichtung und Walzgut möglichst klein gehalten werden, um ein ungleichmäßiges Abkühlen des Walzguts aufgrund des Kontakts der Hebeeinrichtung mit dem Walzgut zum Zwecke des Anhebens des Walzguts zu vermeiden.

Darüber hinaus ist es vorteilhaft, dass der Reflektor translatorisch in vertikaler und/oder horizontaler Richtung verschiebbar ist. Dadurch ist es möglich eine Positionierung des Reflektors in Abhängigkeit von der Breite des abkühlenden Walzguts und der Dicke des abkühlenden Walzguts vorzunehmen.

Dabei dient der horizontale Freiheitsgrad der Bewegung der Anpassung der Reflektorposition an die Breite des Walzguts und der vertikale Freiheitsgrad der Anpassung der Reflektorposition an die Dicke des Walzguts.

Im Falle einer Verwendung einer Hebeeinrichtung zum Bewegen des Walzguts zwischen einem Transportniveau bzw. dem Rollengangniveau und einer erhöhten Position relativ zum Transportniveau bzw. dem Rollengangniveau ist es ebenfalls vorteilhaft, wenn auch der Reflektor höhenverstellbar ist, d.h. in vertikaler Richtung verschiebbar ist.

In einer weiteren vorteilhaften Ausführungsform der erfindungsgemäßen Walzstraße ist die Heizeinrichtung als Induktionsheizeinrichtung ausgebildet und derart relativ zum Walzgut angeordnet, dass mittels dieser dem Kantenbereich des Walzguts Energie zuführbar ist. Die Vorteile dieser Ausgestaltung ergeben sich analog zum korrespondierenden Verfahrensanspruch.

Alle oben angegebenen Heizeinrichtungen können in beliebiger Weise miteinander kombiniert werden, um eine übermäßige Abkühlung des Kantenbereichs des Walzguts zu vermeiden oder zu beseitigen.

Weitere Vorteile Erfindungen ergeben sich anhand von Ausführungsbeispielen, welche anhand schematischer Zeichnungen nachfolgend genauer erläutert werden. Es zeigen:
- FIG 1: eine schematische Darstellung einer Walzstraße mit einer Heizeinrichtung zum Heizen eines Kantenbe- reichs,
- FIG 2: eine Querschnittssicht des Walzguts mit einem Re- flektor zum passiven Heizen des Walzguts,
- FIG 3: eine Querschnittsansicht des Walzguts mit einer In- duktionsheizung zum aktiven Heizen des Walzguts,
- FIG 4: eine Querschnittsansicht einer weiteren Ausfüh- rungsform eines Reflektors mit erhöhtem Wirkungs- grad,
- FIG 5: eine Querschnittsansicht einer Ausführungsform, bei der ein Reflektor und ein Heizbrenner gemeinsam zum Heizen des Kantenbereichs verwendet werden,
- FIG 6: eine Querschnittsansicht einer Ausführungsform, bei der ein Reflektor in Kombination mit verdickten Kantenbereichen verwendet wird.

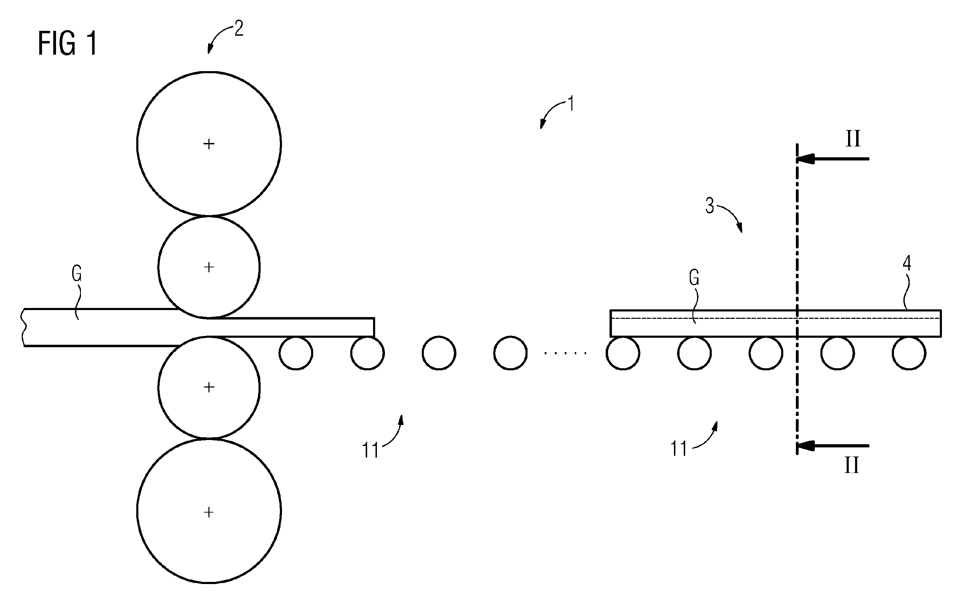

FIG 1 zeigt eine Walzstraße 1 zum Grobblechwalzen, insbesondere thermomechanische Walzen von Walzgut G. Diese umfasst im vorliegenden Ausführungsbeispiel genau ein Walzgerüst 2 zur Durchführung von Warmumformungen des Walzguts G. Die Erfindung ist jedoch auch für Walzstraßen mit mehreren Walzgerüsten anwendbar. Die Erfindung ist insbesondere für das Reversierwalzen anwendbar, jedoch auch für das Einwegwalzen bzw. kontinuierliche Walzen von Walzgut.

Um das in einer ersten Walzumformung bzw. Walzstich gewalzte Walzgut G für eine zweite Walzumformung bzw. einen zweiten Walzstich vorzubereiten, wird dieses in einer von der Walzstraße 1 umfassten Kühleinrichtung bzw. einem Kühlbereich 3 abgekühlt. Durch die Abkühlung des Walzguts G auf eine Zieltemperatur für den nachfolgenden Walzstich werden die Eigenschaften des Walzguts G in gewünschter Weise eingestellt.

Beim Abkühlen, egal mit welcher Methode, d.h. ob mit flüssigen Medien oder gasförmigen Medien, z.B. an Luft, tritt in der Regel ein verstärktes Abkühlen der Randbereiche des Walzguts G, der sogenannten Kantenbereiche K, auf, da diese ein größeres Verhältnis von Oberfläche zu Volumen haben, als der Mittenbereich des Walzguts G.

Um dieses Problem zu verringern wird im Stand der Technik etwa bei einer wasserbasierten Abkühlung des Walzguts G ein sogenanntes Edge Masking vorgenommen. Dabei wird das Kühlwasser vorwiegend in einem Mittenbereich des Walzguts G aufgebracht. Der Kantenbereich des Walzguts G wird durch Masken vor dem Kühlwasser geschützt, wodurch eine geringere Abkühlung des Kantenbereichs als ohne Maskierung erreicht wird.

In der vorliegenden Walzstraße 1 ist zur Vermeidung bzw. Behebung der übermäßigen Abkühlung des Kantenbereichs K eine Heizeinrichtung 4 vorgesehen, mittels welcher dem Kantenbereich K des Walzguts G Energie zugeführt werden kann. Diese Heizeinrichtung 4 ist in FIG 1 schematisch angedeutet.

Vorzugsweise ist die Heizeinrichtung 4 derart ausgebildet, dass der Kantenbereich des Walzguts über die gesamte Länge des Walzguts beheizbar ist.

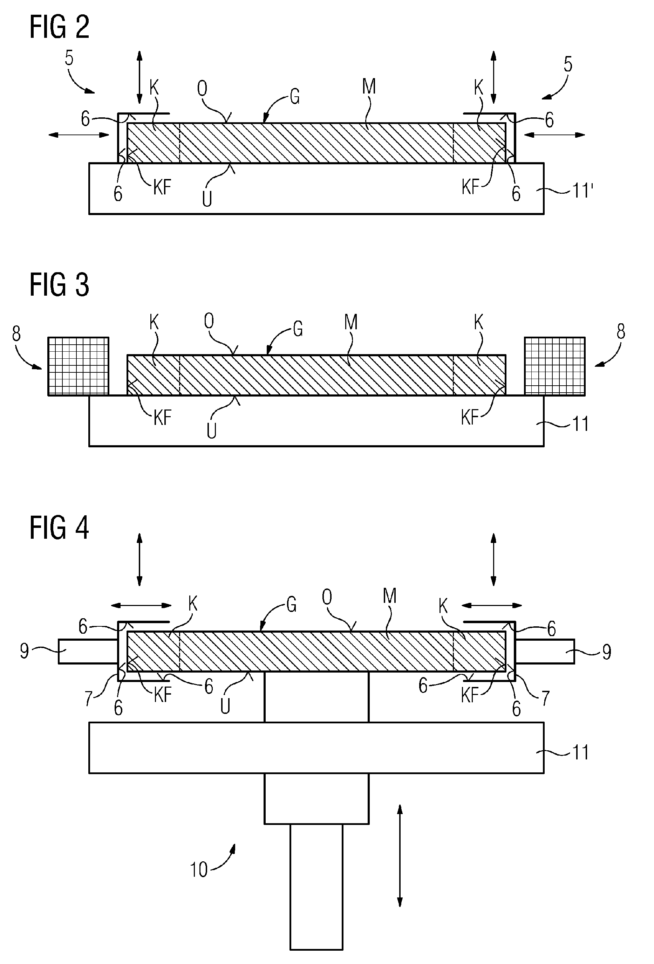

FIG 2 bis 6 zeigen verschiedene, nicht abschließende Möglichkeiten zur Realisierung einer solchen Heizeinrichtung 4 zum Heizen eines Kantenbereichs K eines Walzguts G.

FIG 2 zeigt einen Querschnitt eines Walzguts G. In der Regel ist das Walzgut G in der Kühleinrichtung bzw. dem Kühlbereich wenigstens innerhalb eines bestimmten Zeitraums auf einem Rollengang 11, vgl. FIG 1, angeordnet. Dabei ist das Walzgut im Wesentlichen horizontal ausgerichtet. Eine Rolle 11' des Rollgangs ist in FIG 2 dargestellt.

Das Walzgut G weist einen Mittenbereich M auf und einen Kantenbereich K. Der Mittenbereich M ist in Breitenrichtung auf Antriebsseite und Bedienseite vom Kantenbereich K begrenzt. Das Walzgut G weist ferner eine Oberseite O und eine Unterseite U auf. Unter der Oberseite O wird die dem Rollengang 11, siehe FIG 1, abgewandte Fläche des Walzguts G verstanden, unter der Unterseite U die dem Rollengang 11, siehe FIG 1, zugewandte Fläche des Walzguts G.

Der Kantenbereich K des Walzguts G zeichnet sich dadurch aus, dass dieser ohne weitere ergriffene entgegenwirkende Maßnahmen schneller abkühlt, als der Mittenbereich M des Walzguts G, und somit während des Abkühlens des Walzguts G eine Temperaturdifferenz zwischen dem Walzgutmittenbereich M und dem Kantenbereich K entsteht. Dies hat negative Auswirkungen auf die Qualität des Endproduktes.

Gemäß FIG 2 ist in der Nähe des Kantenbereichs K des Walzguts G eine als Reflektor 5 ausgebildete Heizeinrichtung angeordnet, um eine übermäßige Abkühlung des Kantenbereichs K zu verhindern. Der Reflektor 5 ist sowohl auf der Antriebsseite als auch auf der Bedienseite der Walzstraße 1 bzw. des Rollengangs 11, siehe FIG 1, angeordnet.

Der Reflektor 5 weist gemäß FIG 2 zwei flächenförmige Schenkel auf, welche einen Winkel, im vorliegenden Beispiel einen Winkel von ca. 90 Grad, einschließen, nachfolgend als Reflektorflächen 6 bezeichnet.

Aufgrund der horizontalen Ausrichtung des Walzguts G auf dem Rollengang ist die erste Reflektorflächen 6 ebenfalls horizontal angeordnet und verläuft daher im Wesentlichen parallel zur Oberseite O des Walzguts G.

Die zweite Reflektorfläche 6 steht vertikal zu ersten Reflektorfläche 6 und verläuft im Wesentlichen parallel zur Kantenflächen KF des Kantenbereichs K des Walzguts G.

Diese Anordnung erlaubt es, durch Mehrfachreflektionen von vom Kantenbereich K ausgehende Infrarot-Strahlung wieder auf den Kantenbereich K zurückzulenken. Der in FIG 2 schematisch dargestellte Reflektor 5 ist somit eine passive Heizeinrichtung, da dieser lediglich mit der vom Walzgut G, insbesondere vom Kantenbereich K, stammende Infrarot-Strahlung heizt und darüber hinaus im Wesentlichen keine zusätzliche Energie in den Kantenbereich K einbringen kann.

Der Reflektor 5 ist horizontal, insbesondere senkrecht zur vom Rollengang vorgegebenen Transportrichtung, bewegbar. Ferner ist der Reflektor 5 senkrecht zur Transportrichtung, insbesondere vertikal, bewegbar. Durch die Bewegbarkeit des Reflektors 5 kann dessen Position auf der Antriebsseite und Bedienseite der Walzstraße 1 auf die Breite und/oder Dicke des abkühlenden Walzguts G eingestellt werden.

Vorzugsweise erstreckt sich der Reflektor 5 sowohl auf Antriebsseite als auch auf der Bedienseite über die gesamte Länge des abkühlenden Walzguts G.

Die obigen Ausführungen zum Walzgut G gelten analog im Rahmen der Figurenbeschreibung für FIG 3 bis FIG 6.

In FIG 3 ist anstatt eines Reflektors 5 eine Induktionsspulen umfassende Induktionsheizung 8 im Kühlbereich 3 der Walzstraße 1 angeordnet. Je nach vorhandenem Platz können die Spulen oberhalb, unterhalb oder seitlich des Walzguts G angeordnet werden, um Wirbelströme im Kantenbereich K des Walzguts G zu erzeugen.

Durch Einstellung des Spulenstromes und der Frequenz des Spulenstromes kann die dem Kantenbereich K zugeführte Energie ebenso gesteuert werden, wie die Eindringtiefe der magnetischen Wechselfelder.

Bei der Energieeinbringung mittels Induktionsheizung ist darauf zu achten, dass der Energieeintrag bestimmte Grenzwerte, z.B. die durch Wirbelströme im Walzgut hervorgerufenen Temperaturen, nicht übersteigt. Insbesondere sollte die eingestellte Temperatur im Kantenbereich die Temperatur des Mittenbereichs um nicht mehr als einen vorgebbaren prozentualen Anteil, insbesondere um einen Faktor kleiner 1, übersteigen.

Die Induktionsheizung 8 ist eine aktive Heizeinrichtung, da mittels dieser dem Kantenbereich Energie durch Aufbringen von elektrischer Leistung gezielt zugeführt werden kann.

FIG 4 zeigt eine weitere Möglichkeit eine übermäßige Abkühlung des Kantenbereichs K zu beseitigen bzw. zu vermeiden.

Hierbei ist im Kühlbereich, z.B. zwischen den Rollen 11' des Rollengangs, eine Hebeeinrichtung 10 angeordnet, mit welcher das Walzgut G angehoben werden kann.

Die Hebeeinrichtung 10 kann bspw. als eine Mehrzahl von, z.B. zwei, hydraulisch verfahrbaren Stempeln ausgebildet sein, mittels derer das Walzgut G im Kühlbereich 3 der Walzstraße 1 anhebbar ist. Das Walzgut G kühlt somit im Kühlbereich 3 hauptsächlich im angehobenen Zustand ab.

Vorzugsweise ist der Kontaktbereich des Stempels beheizbar, so dass eine durch Wärmeleitung bedingte verstärkte Abkühlung des Walzguts im Kontaktbereich mit dem Stempel verringert bzw. vermieden werden kann. Dies ist in FIG 4 nicht dargestellt.

Durch Abheben des Walzguts G vom Rollengang 11 ist es möglich, einen Teil des Reflektors 7, insbesondere eine der Reflektorflächen 6, auf der Unterseite U des Walzguts G anzuordnen. Der Reflektor 7 greift also um den Kantenbereich K herum. Im vorliegenden Fall ist das Reflektorprofil "U"-förmig ausgebildet, wobei das "U"-Profil um 90 Grad in der Blattebene gedreht wird.

Es können auch andere, um den Kantenbereich K herumgreifende Reflektorprofile gewählt werden, bspw. ein "C"-Profil oder ein parabolisches Profil.

Durch einen derartigen Reflektor 7 werden zusätzliche, vom Kantenbereich K emittierte Strahlungsanteile von einer Reflektorfläche 6 bzw. einer Reflektorteilfläche erfasst und wieder auf den Kantenbereich K des Walzguts G zurückgeleitet. Eine derartige Reflektorausgestaltung weist einen besonders hohen Wirkungsgrad für eine passive Heizeinrichtung auf.

Kurz vor Erreichen der gewünschten Zieltemperatur für das Walzgut G wird die Hebeeinrichtung 10 wieder abgesenkt, wodurch das Walzgut G wieder auf dem Rollengang zu liegen kommt. Anschließend wird dieses der nächsten Warmwalzumformung unterzogen.

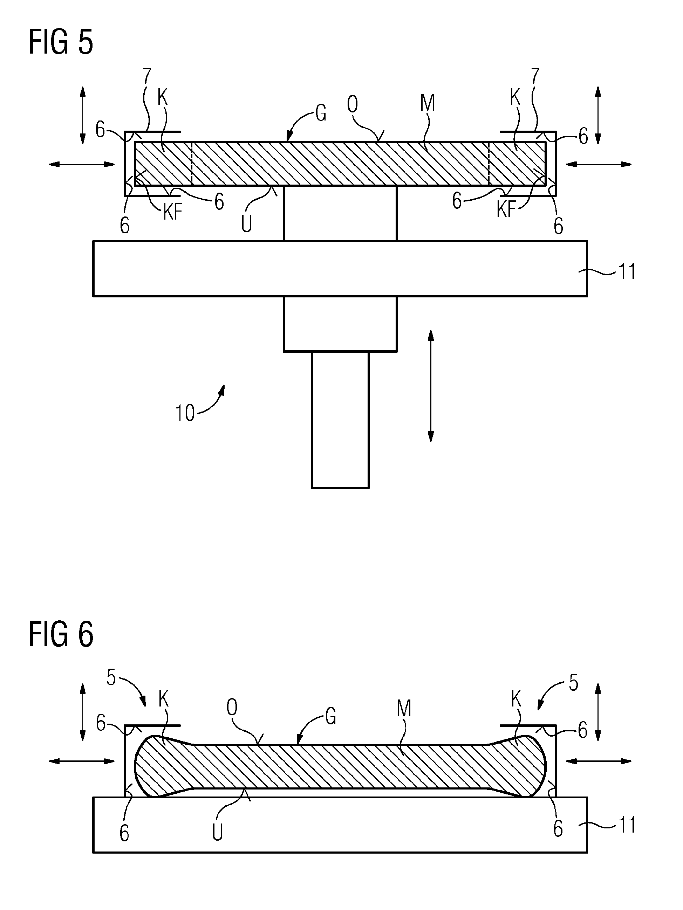

FIG 5 zeigt eine vorteilhafte Kombination einer passiven und einer aktiven Heizeinrichtung. In diesem Fall ist ein "U"-förmiger, d.h. ein den Kantenbereich K umgreifender, Reflektor 7 mit wenigstens einem Heizbrenner 9 kombiniert.

Vorzugsweise wird eine Mehrzahl an Heizbrennern 9 in Kombination mit dem Reflektor 7 verwendet. Vorteilhaft ist es, die Heizbrenner an einer Aussparung der der Kantenfläche KF gegenüberliegenden Fläche des Reflektors 7 anzuordnen, so dass im Betrieb dessen Heizflamme in den von den Reflektorflächen 6 umschlossenen Raum hineinragen kann.

Vorzugsweise ist eine Mehrzahl an Heizbrennern 9 auf Antriebsseite und Bedienseite, auf jeder Seite jeweils äquidistant in Längsrichtung des Reflektors 7, in der oben beschriebenen Weise angeordnet.

Die Verwendung eines Heiz-Brenners 9 kann sinnvoll in Kombination mit dem U-förmigen Reflektor 7 und der Hebeeinrichtung 10 verwendet werden, da in diesem Fall das Walzgut G während des Kühlens nicht mehr auf dem Rollengang 11, vgl. FIG 1, angeordnet ist. Wäre das Walzgut noch auf dem Rollengang angeordnet, so könnten die Heizbrenner 9 die Rollen 11 des Rollengangs beim Heizen des Kantenbereichs K beschädigen. Durch den Betrieb des Heizbrenners 9, insbesondere vorzugsweise nur während des Zeitraum, in dem das Walzgut G durch die Hebeeinrichtung 10 angehoben ist, kann eine Beschädigung des Rollengangs durch den bzw. die Heizbrenner 9 vermieden werden.

Eine weitere vorteilhafte Ausführungsform zur Vermeidung bzw. Beseitigung einer übermäßigen Abkühlung eines Kantenbereichs K des Walzguts G zeigt auch FIG 6. Hier wurde zeitlich vor dem Abkühlvorgang noch eine Kantenverdickung für den Kantenbereich K des Walzguts G durchgeführt. Dadurch wird das Verhältnis von Oberfläche zu Volumen für den Kantenbereich K verkleinert, wodurch weniger Energie vom Kantenbereich K an die Umgebung abgegeben wird.

Die Verdickung des Kantenbereichs K kann bspw. mittels eines Stauchgerüsts erfolgen. Dies wäre eine einfache und herkömmliche Variante.

Alternativ kann eine derartige Verdickung des Kantenbereichs K auch erreicht werden, indem mittels eines herkömmlichen horizontal walzenden Walzgerüsts eine Dickenverteilung in Längsrichtung in das Walzgut gewalzt wird und anschließend das Walzgut um 90 Grad auf dem Rollengang 11 gedreht wird und erneut gewalzt wird. Dieses Verfahren ist unter dem Begriff Plan View Pattern Control-Verfahren, abgekürzt PVPC-Verfahren, bekannt. Hierdurch lässt sich ebenfalls eine gezielte Kantenverdickung erreichen.

Alle passiven und aktiven Heizeinrichtungen, insbesondere die oben genannten, können in geeigneter Weise kombiniert werden und gemeinsam zum Beheizen des Kantenbereichs K verwendet werden. Dies gilt ebenso für die Kombination von einer oder mehrerer Heizeinrichtungen mit einem verdickten Kantenbereich K.

Durch die Erfindung lassen sich die Nachteile eines übermäßigen Abkühlens des Kantenbereichs beim thermomechanischen Walzen von Walzgut vermeiden bzw. beheben. Es könne hierdurch qualitativ hochwertige Endprodukte hergestellt werden. Der Anfall von Thermoschrott, d.h. Schrott beim thermomechanischen Walzen aufgrund von Nichteinhaltung von Qualitätskriterien und von Temperaturrandbedingungen, kann signifikant reduziert werden, wodurch der Betreiber wirtschaftliche Vorteile genießt.

## Patentansprüche

1. Verfahren zum Walzen von Walzgut (G), insbesondere Grobblech, wobei das Walzgut (G) einen Walzprozess durchläuft, wobei der Walzprozess eine erste Warmwalzumformung und eine zweite Warmwalzumformung umfasst, wobei der Walzprozess eine Kühlphase zwischen der ersten und der zweiten Warmwalzumformung umfasst, während der das Walzgut (G) von einer ersten höheren Temperatur auf eine zweite niedrigere Temperatur abgekühlt wird, wobei während des Kühlens des Walzguts (G) einer Temperaturdifferenz zwischen einem Mittenbereich (M) des Walzguts (G) und einem Kantenbereichs (K) des Walzguts (G) entgegengewirkt wird,
**dadurch gekennzeichnet, dass** während des Kühlens der Kantenbereich (K) wenigstens abschnittsweise mittels einer Heizeinrichtung (4, 5, 7, 8, 9) geheizt wird.

2. Verfahren nach Anspruch 1,
**dadurch gekennzeichnet, dass** während des Kühlens der Kantenbereich (K) durch Infrarot-Strahlung geheizt wird.

3. Verfahren nach Anspruch 2,
**dadurch gekennzeichnet, dass** der Kantenbereich (K) durch vom Kantenbereich (K) abgestrahlte und von einem Reflektor (5, 7) auf den Kantenbereich (K) zurückreflektierte Infrarot-Strahlung geheizt wird.

4. Verfahren nach Anspruch 1,
**dadurch gekennzeichnet, dass** der Kantenbereich (K) mittels eines Heiz-Brenners (7) geheizt wird.

5. Verfahren nach Anspruch 1,
**dadurch gekennzeichnet, dass** der Kantenbereich (K) mittels in das Walzgut (G) induzierter Wirbelströme geheizt wird.

6. Verfahren nach einem der Ansprüche 1 bis 5,
**dadurch gekennzeichnet, dass** der Abkühlung des Kantenbereich (K) zusätzlich entgegenwirkt wird, indem zeitlich vor dem Kühlen der Kantenbereich (K) relativ zum Mittenbereich (M) des Walzguts (G) verdickt wird.

7. Walzstraße (1) mit wenigstens einem Walzgerüst (2) zum thermomechanischen Walzen von Walzgut (G), insbesondere Grobblech, mit einer Einrichtung (3) zum Kühlen von zwischen zwei Warmumformungen, insbesondere Warmwalzstichen, zu kühlendem Walzgut (G), **gekennzeichnet durch** wenigstens eine Heizeinrichtung (4, 5, 7, 8, 9) im Bereich der Kühleinrichtung (3) zum Heizen eines Kantenbereichs (K) des Walzguts (G).

8. Walzstraße nach Anspruch 7,
**dadurch gekennzeichnet, dass** die Heizeinrichtung (4, 5, 7, 8, 9) eine Infrarot-Strahlenquelle (5, 7) umfasst.

9. Walzstraße nach Anspruch 8,
**dadurch gekennzeichnet, dass** die Infrarot-Strahlenquelle (5, 7) einen Reflektor (5, 7) umfasst, und dass der Reflektor (5, 7) derart ausgebildet und angeordnet ist, dass vom Kantenbereich (K) ausgehende Infrarot-Strahlen wenigstens teilweise auf den Kantenbereich (K) des Walzguts (G) zurückreflektiert werden.

10. Walzstraße nach Anspruch 9,
**dadurch gekennzeichnet, dass** der Reflektor (5, 7) wenigstens zwei Infrarot-Strahlen reflektierende Flächen (6) aufweist, welche einen Winkel einschließen.

11. Walzstraße nach Anspruch 9,
**dadurch gekennzeichnet, dass** der Reflektor (5, 7) derart ausgebildet ist, dass dieser den Kantenbereich (K) umgreift.

12. Walzstraße nach einem der Ansprüche 9 bis 11,
**dadurch gekennzeichnet, dass** der Reflektor (5, 7) translatorisch in vertikaler und/oder horizontaler Richtung verschiebbar ist.

13. Walzstraße nach einem der Ansprüche 7 bis 12,
**dadurch gekennzeichnet, dass** die Heizeinrichtung (4, 5, 7, 8, 9) wenigstens einen Heiz-Brenner (9) umfasst.

14. Walzstraße nach einem der Ansprüche 7 bis 13,
**dadurch gekennzeichnet, dass** die Heizeinrichtung (4, 5, 7, 8, 9) eine Induktionsheizeinrichtung (8) umfasst und derart relativ zum Walzgut (G) angeordnet ist, dass mittels dieser dem Kantenbereich (K) des Walzguts (G) Energie zuführbar ist.
